# FASCICULE DE BREVET EUROPEEN

(11) **EP 3 166 220 B1**
(45) Date de publication et mention de la délivrance du brevet: **03.07.2019**
(21) Numéro de dépôt: 16195346.8
(22) Date de dépôt: 24.10.2016
(51) Int. Cl.: H02P 29/00, H02P 27/06, H02P 1/04, H02P 21/14

(54) **DISPOSITIF DE LIMITATION DYNAMIQUE ET PROCEDE DE LIMITATION DYNAMIQUE PAR UN TEL DISPOSITIF**
VORRICHTUNG ZUR DYNAMISCHEN BEGRENZUNG, UND VERFAHREN ZUR DYNAMISCHEN BEGRENZUNG DURCH EINE SOLCHE VORRICHTUNG
DYNAMIC LIMITING DEVICE AND METHOD FOR DYNAMIC LIMITING BY SUCH A DEVICE

(30) Priorité: 04.11.2015 FR 1502322
(43) Date de publication de la demande: 10.05.2017
(73) Titulaire: Thales, 92400 Courbevoie (FR)
(72) Inventeur: GUGUEN, Stéphane, 78400 CHATOU (FR)
(74) Mandataire: Collet, Alain

(56) Documents cités:
- EP-A2- 2 197 103
- DE-A1- 2 337 722
- JP-A- H05 137 373
- JP-A- H10 191 686
- US-A- 4 268 781
- US-A1- 2010 283 420

## Description

L'invention se situe dans le domaine de pilotage de moteurs, ou machines électriques, à courant continu ou alternatif. Elle concerne un dispositif de limitation dynamique de l'accélération et/ou de la puissance du moteur. L'invention concerne aussi un procédé de limitation dynamique par un tel dispositif.

Une machine électrique peut fonctionner en mode démarreur pour, par exemple, démarrer une turbine, puis en mode génératrice pour fournir la puissance électrique nécessaire à tout système nécessitant une puissance électrique. En mode démarreur, pendant la phase de démarrage, des profils de vitesse bien particuliers sont exigés. Un courant est alors généré et ce courant va provoquer la génération d'un couple au niveau de l'arbre moteur, pour démarrer la turbine par exemple. Il arrive parfois que l'accélération de l'arbre moteur qui en résulte dépasse une valeur maximale d'accélération. Cela engendre notamment une usure prématurée des pièces mécaniques du système. Il est alors nécessaire de limiter l'accélération de l'arbre moteur.

Il existe des solutions basées sur le principe d'une limitation figée du courant généré. De telles solutions sont trop limitatives dans l'utilisation de la machine électrique. En effet, en phase de démarrage, la consigne de couple est relativement importante. Par temps chaud, la température ambiante étant suffisamment élevée, le couple résistant global sera assez faible du fait d'une bonne lubrification. Dans ce cas de figure, la machine électrique peut dépasser la valeur maximale d'accélération. Mais en imposant une limitation du courant fixe, dans un cas d'utilisation par temps froid où le couple résistant global est plus important du fait de l'épaississement des lubrifiants, la valeur maximale d'accélération ne serait de toute façon pas atteinte et la limitation du courant fixe limiterait les capacités de la machine. Elle pourrait même empêcher le démarrage sous certaines conditions.

Le document US 2010/0283420 traite du contrôle de la puissance avec une consigne en vitesse. Le document EP 2197103 divulgue un dispositif de pilotage en commande vectorielle.

Il est donc souhaitable d'avoir une solution permettant de ne pas dépasser la valeur maximale d'accélération mais de pouvoir néanmoins utiliser la machine électrique de manière optimale, c'est-à-dire d'avoir une valeur de saturation du courant qui évolue en fonction du temps.

De manière similaire, il est parfois nécessaire de limiter la puissance développée en sortie du moteur.

La présente invention propose de ne pas dépasser ponctuellement une valeur d'accélération donnée en se basant sur une limitation dynamique du courant maximal. L'invention propose également une même méthode de régulation du courant maximal pour une limitation en puissance.

La limitation de l'accélération intervient dans le but de limiter l'usure prématurée des pièces mécaniques du système. Cette limitation de l'accélération permet aussi de diminuer les à-coups lors des phases de transition de mode de fonctionnement. Enfin, la limitation de l'accélération est particulièrement intéressante pour des démarrages à accélération constante.

A cet effet, l'invention a pour objet un dispositif de limitation dynamique d'au moins un paramètre dynamique de sortie d'un moteur électrique apte à recevoir au moins une consigne de fonctionnement, caractérisé en ce qu'un premier du au moins un paramètre dynamique de sortie étant l'accélération de l'arbre moteur, en ce qu'il comprend :
- un générateur d'un courant maximal dynamique proportionnel à une première consigne de fonctionnement du moteur et destiné à alimenter le moteur pour générer un couple de rotation d'un arbre du moteur électrique en fonction de la première consigne,
- un premier estimateur de l'accélération du moteur électrique,
- un premier limiteur dynamique de l'accélération du moteur,
et en ce que le premier limiteur dynamique de l'accélération du moteur comprend :
- un premier comparateur de la valeur de l'accélération estimée avec une valeur maximale prédéfinie de l'accélération,
- un premier correcteur destiné à générer un premier courant de correction dont la valeur dépend du résultat de la comparaison et destiné à être additionné au courant maximal dynamique pour alimenter le moteur.

Avantageusement, un deuxième du au moins un paramètre dynamique de sortie étant la puissance en sortie du moteur, le dispositif de limitation dynamique comprend un deuxième estimateur de la puissance en sortie du moteur électrique, un deuxième limiteur dynamique de la puissance en sortie du moteur, et le deuxième limiteur dynamique de la puissance en sortie du moteur comprend un deuxième comparateur de la de la puissance estimée avec une valeur maximale prédéfinie de la puissance, un deuxième correcteur destiné à générer un deuxième courant de correction dont la valeur dépend du résultat de la comparaison et destiné à être additionné au courant maximal dynamique pour alimenter le moteur, un module de choix destiné à choisir le courant le plus faible parmi le premier courant de correction et le deuxième courant de correction à additionner au courant maximal dynamique pour alimenter le moteur.

Avantageusement, la valeur maximale de l'accélération est réglable et elle peut être supérieure à toute valeur possible de l'accélération.

Avantageusement, la valeur maximale de la puissance est réglable et elle peut être supérieure à toute valeur possible de la puissance.

Selon un autre mode de réalisation, le dispositif de limitation dynamique comprend en outre un dispositif de pilotage en commande vectorielle du moteur électrique, le moteur comprenant un stator comprenant des enroulements, apte à recevoir un courant de pilotage et produire un champ magnétique tournant, les enroulements du stator générant une tension aux bornes du moteur, un rotor produisant un champ magnétique destiné à suivre le champ magnétique tournant et le dispositif de pilotage comprend un générateur d'un courant dans un domaine vectoriel, un calculateur configuré pour faire une transformée du courant du domaine vectoriel vers un domaine réel permettant la génération du courant de pilotage, un calculateur inverse configuré pour faire une transformée inverse d'un paramètre mesuré dans le domaine réel sur les enroulements statoriques en une transformée inverse du paramètre dans le domaine vectoriel, un comparateur de la valeur de la transformée inverse du paramètre avec une valeur maximale prédéfinie du paramètre, dont le résultat permet de piloter le générateur du courant dans le domaine vectoriel.

Avantageusement, le courant généré par le générateur du courant dans le domaine vectoriel est un courant de consigne direct établi en coordonnées de Park et en ce que le calculateur est configuré pour recevoir un courant de consigne en quadrature établi en coordonnées de Park et proportionnel à la consigne de fonctionnement.

Avantageusement, le paramètre mesuré dans le domaine réel est la tension aux bornes du moteur.

Selon un mode de réalisation, le générateur du courant est un correcteur de défluxage délivrant le courant :
- nul si la valeur de la transformée inverse du paramètre est inférieure à la valeur maximale prédéfinie de paramètre ou
- non nul si la valeur de la transformée inverse du paramètre est supérieure ou égale à la valeur maximale prédéfinie de paramètre.

L'invention concerne aussi un procédé de limitation dynamique mettant en oeuvre un tel dispositif, un premier du au moins un paramètre dynamique de sortie étant l'accélération de l'arbre moteur, comprenant :
- un générateur d'un courant maximal dynamique proportionnel à une première consigne de fonctionnement du moteur et destiné à alimenter le moteur pour générer un couple de rotation d'un arbre du moteur électrique en fonction de la première consigne,
- un premier estimateur de l'accélération de l'arbre moteur,
- un premier limiteur dynamique de l'accélération de l'arbre moteur,
le premier limiteur dynamique de l'accélération de l'arbre moteur comprenant :
- un premier comparateur de la valeur de l'accélération estimée avec une valeur maximale prédéfinie de l'accélération,
- un premier correcteur destiné à générer un premier courant de correction dont la valeur dépend du résultat de la comparaison et destiné à être additionné au courant maximal dynamique pour alimenter le moteur,
   le procédé comportant les étapes suivantes :
   - comparaison de la valeur de l'accélération estimée avec une valeur maximale de l'accélération prédéfinie,
   - génération d'un premier courant de correction dont la valeur dépend du résultat de la comparaison et destiné à être additionné au courant maximal dynamique pour alimenter le moteur, de manière à ce que l'accélération de l'arbre moteur ne dépasse pas la valeur maximale de l'accélération et l'accélération corresponde à la consigne de fonctionnement.

Un deuxième du au moins un paramètre dynamique de sortie étant la puissance en sortie du moteur, le procédé de limitation dynamique peut comporter les étapes suivantes :
- comparaison de la valeur de la puissance estimée avec une valeur maximale de la puissance prédéfinie,
- génération d'un deuxième courant de correction dont la valeur dépend du résultat de la comparaison et destiné à être additionné au courant maximal dynamique pour alimenter le moteur, de manière à ce que la puissance ne dépasse pas la valeur maximale de la puissance et la puissance corresponde à la consigne de fonctionnement.

Le procédé de limitation dynamique peut comporter en outre une étape de choix du courant le plus faible parmi le premier courant de correction et le deuxième courant de correction à additionner au courant maximal dynamique pour alimenter le moteur.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un dispositif de limitation dynamique de l'accélération de l'arbre moteur selon l'invention;
- la figure 2 représente schématiquement un limiteur de l'accélération selon l'invention;
- la figure 3 représente schématiquement un dispositif de limitation dynamique de l'accélération de l'arbre moteur et de la puissance en sortie du moteur selon l'invention ;
- la figure 4 représente schématiquement un dispositif de pilotage en commande vectorielle d'un moteur selon l'invention ;
- la figure 5 représente les étapes d'un procédé de limitation dynamique d'un paramètre selon l'invention ;
- la figure 6 représente les étapes d'un procédé de limitation dynamique de deux paramètres selon l'invention ;
- la figure 7 représente un diagramme illustrant les valeurs de vitesse, accélération et courant issues d'une simulation d'un démarrage avec limitation dynamique en accélération selon l'invention ;
- la figure 8 représente un diagramme illustrant les valeurs de vitesse, accélération et courant issues d'une simulation d'un démarrage sur une rampe de vitesse avec à-coup de couple, avec limitation dynamique en accélération selon l'invention ;
- la figure 9 représente un diagramme illustrant les valeurs de vitesse, puissance, accélération et courant issues d'une simulation d'un démarrage avec limitation dynamique en accélération et en puissance selon l'invention.

Par souci de clarté, les mêmes éléments porteront les mêmes repères dans les différentes figures.

Dans cette demande, nous parlons d'une manière générale de moteurs électriques. Il est à noter que l'invention s'applique à tout convertisseur continu ou alternatif qui vient alimenter une machine tournante, que celle-ci soit à courant continu ou alternatif.

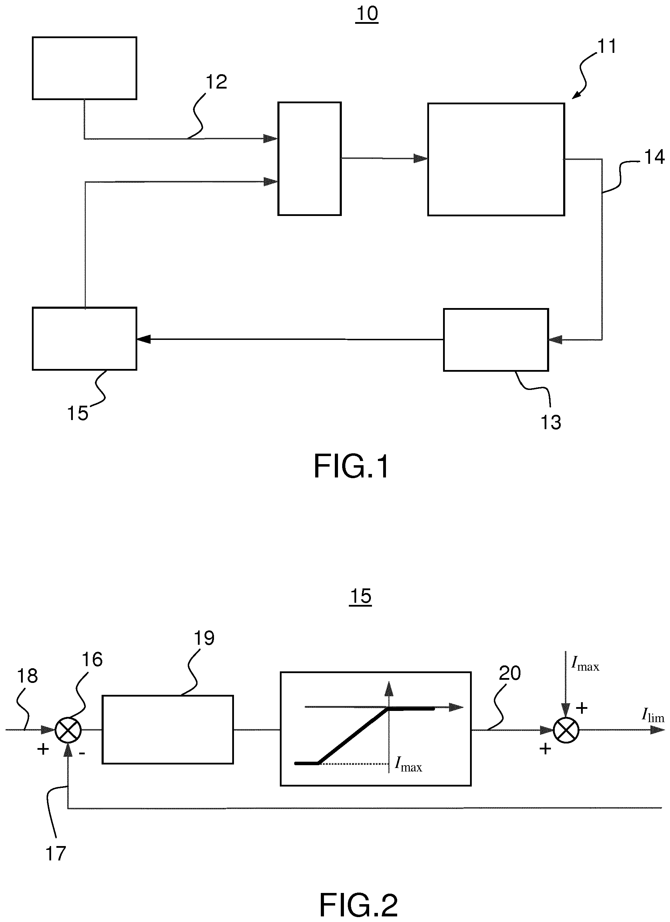

La figure 1 représente schématiquement un dispositif 10 de limitation dynamique de l'accélération de l'arbre moteur selon l'invention. Le dispositif 10 est un dispositif de limitation dynamique d'au moins un paramètre dynamique de sortie d'un moteur électrique 11 apte à recevoir au moins une consigne de fonctionnement 12. Selon l'invention, un premier du au moins un paramètre dynamique de sortie est l'accélération de l'arbre moteur et le dispositif 10 de limitation dynamique comprend un générateur d'un courant maximal dynamique proportionnel à une première consigne de fonctionnement 12 du moteur 11 et destiné à générer un couple de rotation d'un arbre du moteur électrique 11 en fonction de la première consigne 12. Selon l'invention, le dispositif 10 de limitation dynamique comprend aussi un premier estimateur 13 d'un premier du au moins un paramètre dynamique 14 de sortie du moteur électrique 11. Il comprend en outre un premier limiteur dynamique 15 du premier paramètre 14 de sortie du moteur 11.

L'accélération de l'arbre moteur étant le premier paramètre 14, on voit tout d'abord qu'une consigne de fonctionnement 12, par exemple une consigne de vitesse, est générée. Un courant circule alors vers l'onduleur pour transférer un courant correspondant au moteur 11. Le courant correspondant ne doit pas dépasser une certaine valeur maximale Imax. Ce courant fait générer au moteur 11 un couple de rotation faisant tourner l'arbre moteur. Il en résulte une accélération de l'arbre moteur. L'accélération est ensuite estimée ou mesurée par le premier estimateur 13. Dans l'exemple où le premier paramètre 14 est l'accélération, le premier estimateur 13 peut être un accéléromètre, ou bien l'accélération estimée peut être obtenue par plusieurs dérivations de la vitesse et moyennage des valeurs obtenues, ou bien par filtrage de Kalman ou par tout algorithme d'estimation de l'accélération. Il est souhaitable d'avoir une bonne précision dans cette mesure ou estimation. Néanmoins, il faut prendre en compte le temps de réponse pour cette estimation, si bien qu'un bon compromis doit être trouvé entre la précision et le temps de réponse. La valeur de l'accélération estimée ou mesurée est alors comparée à une valeur maximale prédéfinie au moyen du premier comparateur 16.

La figure 2 représente schématiquement le premier limiteur 15 de l'accélération selon l'invention. Le premier limiteur 15 dynamique du premier paramètre 14, dans cet exemple l'accélération, de sortie du moteur 11 comprend un premier comparateur 16 de la valeur du premier paramètre 14 estimée 17 avec une valeur maximale prédéfinie 18 du premier paramètre 14. Le premier limiteur 15 comprend aussi un premier correcteur 19 destiné à générer un premier courant de correction 20 dont la valeur dépend du résultat de la comparaison et destiné à être additionné au courant maximal dynamique pour alimenter le moteur 11. Le premier correcteur 19 peut être un correcteur proportionnel intégral.

Si la valeur de l'accélération mesurée ou estimée est inférieure à la valeur maximale prédéfinie 18, la limite de courant reste inchangée. Par contre, si la valeur de l'accélération mesurée ou estimée est supérieure à la valeur maximale prédéfinie 18, la limite de courant est alors réduite jusqu'à l'obtention d'une valeur d'accélération mesurée ou estimée égale à la valeur d'accélération maximale 18.

Le premier correcteur 19 de type proportionnel intégral permet d'assurer une erreur nulle. Comme montré sur la figure 2, l'action intégrale du correcteur 19 est saturée à 0 pour des valeurs positives et à -Imax pour des valeurs négatives, Imax étant la valeur maximale de courant autorisée. Autrement dit, si la valeur de l'accélération mesurée ou estimée est inférieure à la valeur maximale prédéfinie 18, il n'y a pas besoin de limiter l'accélération, le premier courant de correction 20 est nul. Si la valeur de l'accélération mesurée ou estimée est supérieure à la valeur maximale prédéfinie 18, il faut alors limiter l'accélération pour éviter tout problème d'usure des pièces et autres inconvénients cités précédemment. Le premier courant de correction 20 aura une valeur située entre 0 et -Imax, en fonction de la différence entre la valeur estimée et la valeur maximale. Plus l'accélération estimée ou mesurée sera élevée, plus le premier courant de correction 20 prendra une valeur proche de -Imax. Sur le même principe, avec une valeur de l'accélération estimée supérieure, mais proche de la valeur maximale prédéfinie, le premier courant de correction 20 prendra une valeur plus proche de 0. Le premier courant de correction 20 est sommé au courant maximal dynamique. Si la valeur de l'accélération mesurée ou estimée est supérieure à la valeur maximale prédéfinie 18, un courant négatif, c'est-à-dire le premier courant de correction 20, est sommé au courant maximal statique. On a ainsi un courant maximal dynamique qui décroit.

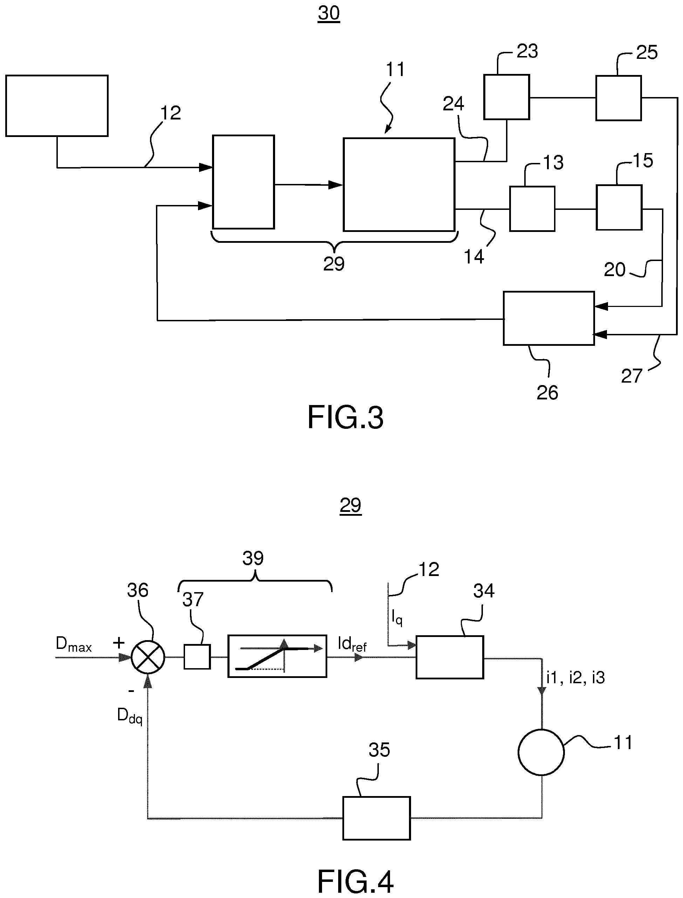

La figure 3 représente schématiquement un dispositif de limitation dynamique 30 de l'accélération de l'arbre moteur et de la puissance en sortie du moteur selon l'invention. On retrouve sur la figure 3 les mêmes éléments que sur la figure 1, à savoir le moteur électrique 11 est apte à recevoir au moins une consigne de fonctionnement 12. Le dispositif 30 de limitation dynamique comprend le générateur d'un courant maximal dynamique proportionnel à la première consigne de fonctionnement 12 du moteur 11 et destiné à alimenter le moteur 11 pour générer un couple de rotation de l'arbre du moteur électrique 11 en fonction de la première consigne 12. Le dispositif 30 de limitation dynamique comprend aussi le premier estimateur 13 du premier paramètre 14, l'accélération, de l'arbre du moteur électrique 11. Il comprend en outre le premier limiteur dynamique 15 du premier paramètre, l'accélération, 14 de l'arbre du moteur 11.

Le dispositif de limitation dynamique 30 comprend un deuxième estimateur 23 d'un deuxième du au moins un paramètre dynamique 24 de sortie du moteur électrique 11. Le dispositif de limitation dynamique 30 comprend un deuxième limiteur dynamique 25 du deuxième paramètre 24 de sortie du moteur 11. Et le deuxième limiteur dynamique 25 du deuxième paramètre 24 de sortie du moteur 11 comprend, similairement au premier limiteur dynamique 15, un deuxième comparateur de la valeur du deuxième paramètre 24 estimée avec une valeur maximale prédéfinie du deuxième paramètre. Le dispositif de limitation dynamique 30 selon l'invention comprend un deuxième correcteur destiné à générer un deuxième courant de correction 27 dont la valeur dépend du résultat de la comparaison et destiné à être additionné au courant maximal dynamique pour alimenter le moteur 11. Le deuxième paramètre 24 est la puissance en sortie du moteur 11. Le deuxième limiteur dynamique 25 est identique au premier limiteur dynamique 15, mais en raisonnant cette fois avec le deuxième paramètre 24 à la place du premier paramètre 14, c'est-à-dire en comparant la puissance estimée à la puissance maximale prédéfinie au lieu de l'accélération estimée à l'accélération maximale prédéfinie.

Enfin, le dispositif de limitation dynamique 30 selon l'invention comprend un module de choix 26 destiné à choisir le courant le plus faible parmi le premier courant de correction 20 et le deuxième courant de correction 27 à additionner au courant maximal dynamique pour alimenter le moteur. Comme la limitation dynamique en accélération et la limitation dynamique en puissance agissent toutes les deux sur le même paramètre qu'est le courant maximal dynamique, il faut que le courant maximal dynamique puisse satisfaire aux deux exigences d'accélération et de puissance. En choisissant le plus faible des deux courants de correction possibles issus respectivement du correcteur de la boucle de limitation de l'accélération et du correcteur de la boucle de limitation de la puissance, on obtient le courant maximal dynamique le plus petit des deux courants maximaux dynamiques possibles. Alternativement, chacun des courants de correction peut auparavant être additionné au courant maximal dynamique et le module de choix 26 choisit le courant maximal dynamique le plus faible des deux courants maximaux dynamiques issus de chacune des deux boucles de limitation.

Il est possible d'avoir la valeur maximale du premier paramètre qui est réglable et elle peut être supérieure à toute valeur possible du premier paramètre. Alternativement, la valeur maximale du deuxième paramètre peut être réglable et elle peut être supérieure à toute valeur possible du deuxième paramètre. Ou bien les deux valeurs maximales respectivement du premier et du deuxième paramètres peuvent être toutes les deux réglables et prendre des valeurs supérieures à toute valeur possible du premier et deuxième paramètres respectivement. Autrement dit, la valeur maximale de l'accélération et/ou de la puissance autorisée(s) est fixée à une valeur largement supérieure à une valeur maximale standard. Ainsi, lorsque le premier et/ou le deuxième comparateur(s) compare la valeur du premier et/ou du deuxième paramètre estimée avec la valeur maximale prédéfinie du premier et/ou deuxième paramètres, la valeur estimée est toujours inférieure à la valeur maximale concernée, il n'y a donc pas de limitation. En procédant ainsi, la boucle de limitation dynamique de l'accélération et la boucle de limitation dynamique de puissance sont présentes, mais la valeur maximale d'un paramètre supérieure à toute valeur possible de ce paramètre permet de débrayer la boucle de limitation dynamique correspondante, c'est-à-dire que la boucle de limitation dynamique correspondante est en quelque sorte désactivée.

On peut également noter que ce raisonnement peut être mené avec des valeurs absolues des valeurs maximales d'un paramètre. En effet, si le premier et/ou le deuxième paramètre(s) était un paramètre à valeur négative, le premier et/ou deuxième correcteur(s) générerait un courant de correction dont la valeur serait située entre 0 et la valeur de saturation Imax. Et dans ce cas, de manière analogique, la valeur absolue de la valeur maximale du premier paramètre pourrait être réglable et elle pourrait être supérieure à toute valeur possible du premier paramètre.

Le dispositif de limitation dynamique selon l'invention peut comprendre en outre un dispositif de pilotage en commande vectorielle 29 du moteur électrique 11.

La figure 4 représente schématiquement un tel dispositif 29 de pilotage en commande vectorielle du moteur 11 apte à recevoir la consigne 12 de fonctionnement. La consigne 12 de fonctionnement peut être une consigne de vitesse ou bien une consigne de couple à délivrer par le moteur 11. Le moteur 11 comprend un stator comprenant des enroulements. Le stator est apte à recevoir un courant de pilotage et produire un champ magnétique tournant, les enroulements du stator générant une tension fcem aux bornes du moteur 11. Cette tension est communément appelée force contre-électromotrice. Le moteur 11 comprend un rotor comprenant des aimants permanents produisant un champ magnétique destiné à suivre le champ magnétique tournant. Le dispositif 29 de pilotage comprend un générateur 33 d'un courant Idref dans un domaine vectoriel. Le dispositif comprend également un calculateur 34 configuré pour faire une transformée du courant Idref du domaine vectoriel vers un domaine réel permettant la génération du courant de pilotage i1, i2, i3 pour du courant triphasé. Le dispositif 29 comprend un calculateur inverse 35 configuré pour faire une transformée inverse d'un paramètre mesuré dans le domaine réel sur les enroulements statoriques du moteur 11 en une transformée du paramètre Ddq dans le domaine vectoriel. Le paramètre mesuré dans le domaine réel peut être par exemple une tension fcem aux bornes du moteur, aussi communément désignée par le terme force contre-électromotrice, ou bien une vitesse mesurée aux bornes du moteur 11. Le calculateur inverse 35 fait, dans le cas de la vitesse, une transformée inverse de la vitesse mesurée aux bornes du moteur 11 en une transformée de la vitesse pour donner la valeur w, correspondant à la pulsation électrique obtenue à partir de la fréquence électrique f par l'opération w = 2πf (la fréquence électrique f étant elle-même obtenue en multipliant le nombre de pôles de la machine électrique par la fréquence de rotation du rotor). La valeur w est transférée au calculateur 34.

Plus précisément, des valeurs vdref et vqref, composantes de la tension respectivement sur l'axe direct d et l'axe transverse q du domaine vectoriel, sont calculées à partir des courants Idref, Iq et de la pulsation électrique w. Les valeurs vdref et vqref sont ramenées en rapport cyclique, correspondant à une image de la tension comprise entre 0 et 1. Le module du rapport cyclique est la valeur Ddq. Autrement dit, l'invention permet de travailler avec des tensions dans le domaine réel et des images de ces tensions dans le domaine vectoriel, sans aucun besoin d'un capteur de tension.

Le dispositif 29 comprend enfin un comparateur 36 de la valeur de la transformée inverse du paramètre Ddq avec une valeur maximale prédéfinie Dmax du paramètre, dont le résultat permet de piloter le générateur 33 du courant Idref dans le domaine vectoriel.

Les grandeurs du domaine réel correspondent aux grandeurs réelles que l'on mesure au niveau du dispositif 29. On peut notamment citer une tension ou un courant réels.

Le domaine vectoriel fait référence à un domaine dans lequel une grandeur est décomposée en deux composantes selon un axe direct d et un axe transverse q. Le domaine vectoriel correspond à un repère tournant lié au champ magnétique du stator.

Ainsi, le courant Idref généré par le générateur 33 du courant dans le domaine vectoriel est un courant de consigne direct établi en coordonnées de Park et le calculateur 35 est configuré pour recevoir un courant de consigne Iqref en quadrature établi en coordonnées de Park et proportionnel à la consigne de vitesse (ou de couple) que reçoit le moteur 11.

Plus précisément, le générateur 33 du courant est un correcteur de défluxage délivrant le courant Idref nul si la valeur de la transformée inverse du paramètre est inférieure à la valeur maximale prédéfinie de paramètre (c'est-à-dire inférieure à la valeur Dmax) ou non nul si la valeur de la transformée inverse du paramètre (c'est-à-dire la tension Ddq) est supérieure ou égale à la valeur maximale prédéfinie de paramètre Dmax.

Le comparateur 36 détermine si la valeur de Ddq est inférieure ou supérieure ou égale à la valeur Dmax. Un correcteur de défluxage 37 délivre alors le courant Idref correspondant. Le correcteur de défluxage 37 peut par exemple être un correcteur proportionnel intégral ou un correcteur intégral seulement.

Il est à noter que le courant Idref est nul si la valeur de Ddq est inférieure à la valeur Dmax. Quand la valeur de Ddq est supérieure à la valeur Dmax, le correcteur 37 génère un courant Idref négatif.

Le dispositif de pilotage en commande vectorielle 29 permet notamment une régulation en vitesse. Cette régulation en vitesse peut être cumulée à la limitation dynamique en accélération et/ou en puissance mais n'est pas nécessaire.

Dans ce qui suit, nous choisissons arbitrairement que le premier paramètre est l'accélération et le deuxième paramètre est la puissance. Il est bien entendu possible de les interchanger sans sortir du cadre de l'invention. L'invention peut également s'appliquer à des paramètres autres que l'accélération et la puissance. Enfin, l'invention peut s'étendre de manière analogue à la limitation dynamique d'un troisième, quatrième, voire plus, paramètres.

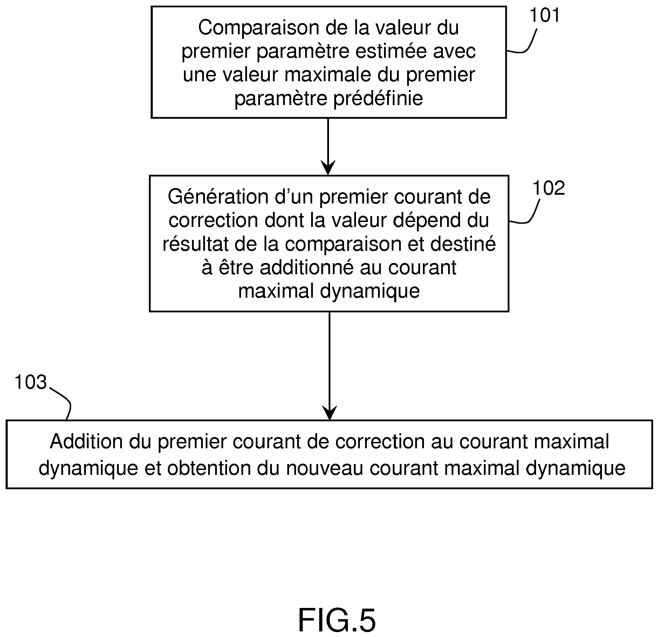

La figure 5 représente les étapes d'un procédé de limitation dynamique d'un paramètre selon l'invention. Le procédé de limitation comporte une étape 101 de comparaison de la valeur du premier paramètre estimée avec une valeur maximale du premier paramètre prédéfinie. Ensuite, il comporte une étape 102 de génération d'un premier courant de correction dont la valeur dépend du résultat de la comparaison. Puis, lors d'une étape 103, le premier courant de correction est additionné au courant maximal dynamique pour obtenir un nouveau courant maximal dynamique, de manière à ce que le premier paramètre ne dépasse pas la valeur maximale du premier paramètre et le premier paramètre corresponde à la consigne de fonctionnement.

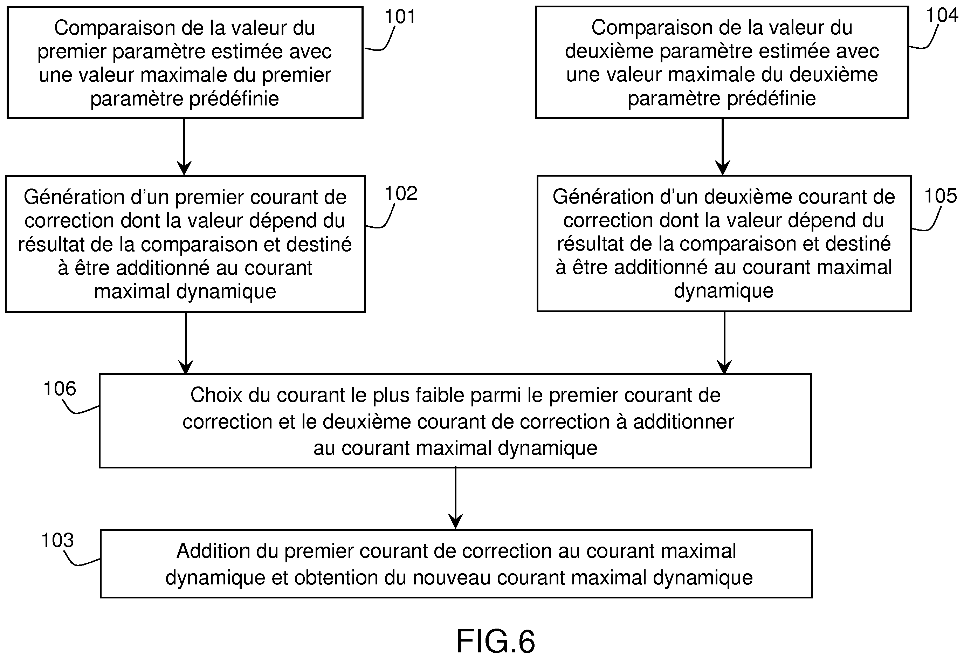

La figure 6 représente les étapes d'un procédé de limitation dynamique de deux paramètres selon l'invention. Le procédé de limitation dynamique comporte les mêmes étapes 101 et 102 telles que présentées à la figure 3. En parallèle des étapes 101 et 102, le procédé de limitation dynamique selon l'invention comporte une étape 104 de comparaison de la valeur du deuxième paramètre estimée avec une valeur maximale du deuxième paramètre prédéfinie, et une étape 105 de génération d'un deuxième courant de correction dont la valeur dépend du résultat de la comparaison. Le procédé de limitation dynamique selon l'invention présenté sur la figure 6 comporte en outre une étape 106 de choix du courant le plus faible parmi le premier courant de correction et le deuxième courant de correction à additionner au courant maximal dynamique. Enfin lors de l'étape 103, le courant de correction choisi lors de l'étape 106 est additionné au courant maximal dynamique, pour obtenir un nouveau courant maximal dynamique, de manière à ce que le premier paramètre ne dépasse pas la valeur maximale du premier paramètre, le deuxième paramètre ne dépasse pas la valeur maximale du deuxième paramètre et les premier et deuxièmes paramètres correspondent à la consigne de fonctionnement. Alternativement, l'étape 103 peut être réalisée avant l'étape 106, auquel cas l'étape 106 de choix consiste alors à choisir le courant maximal dynamique le plus faible parmi les deux courants maximaux dynamiques précédemment obtenus.

Comme expliqué précédemment, nous avons considéré l'accélération et la puissance mais ce procédé peut s'étendre à plusieurs autres paramètres, chaque bloc des étapes de comparaison des valeurs estimée et maximale et de génération d'un courant de correction se faisant en parallèle l'un de l'autre, un bloc par paramètre. Puis se succèdent l'étape 106 du choix du courant de correction et l'étape 103 d'addition du courant de correction choisi au courant maximal dynamique pour obtenir le nouveau courant maximal dynamique répondant aux exigences de tous les paramètres considérés.

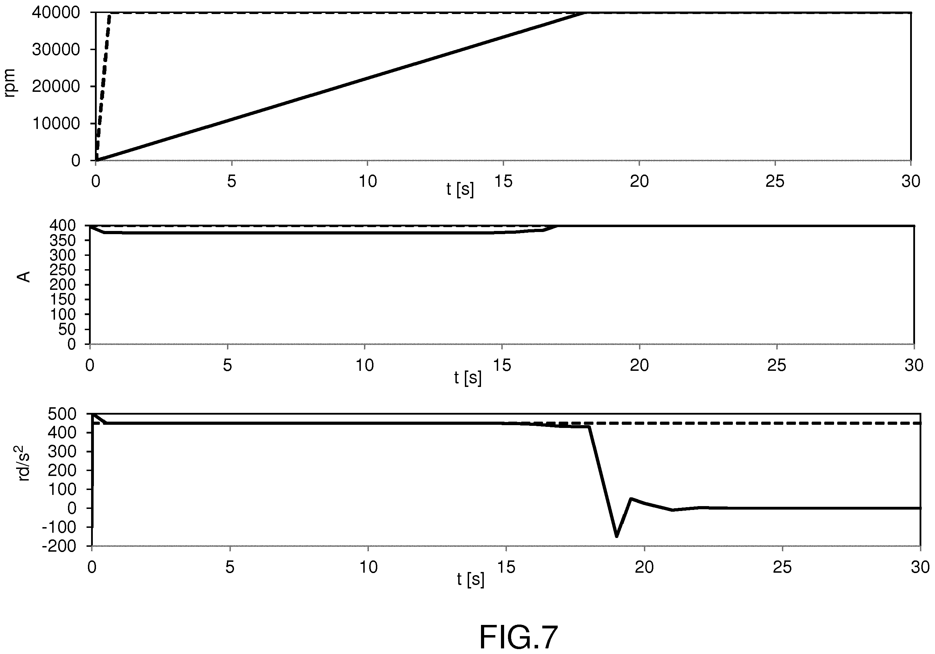

La figure 7 représente un diagramme illustrant les valeurs de vitesse, accélération et courant issues d'une simulation d'un démarrage avec limitation dynamique en accélération selon l'invention. Le graphique en haut de la figure 7 illustre la vitesse en fonction du temps, et plus particulièrement un démarrage contrôlé en vitesse avec pour consigne en pointillés un échelon de vitesse à 40000 rpm (rpm étant l'abréviation du terme anglo-saxon revolutions per minute signifiant tours par minute). Entre le temps initial et jusqu'à atteindre le plateau de la consigne en vitesse, la vitesse mesurée augmente linéairement. Le graphique au milieu de la figure 7 illustre l'évolution du courant maximal dynamique en fonction du temps, avec une valeur de courant maximale, en pointillés, fixée à 400A. Le graphique en bas de la figure 7 illustre l'accélération en fonction du temps, avec une valeur d'accélération maximale de 450 radian/s², en pointillés. En début de démarrage, comme il est souhaité que la vitesse rejoigne la consigne de vitesse, un courant est généré. Au même moment, l'accélération mesurée dépasse la valeur d'accélération maximale. On voit alors que la valeur du courant maximal dynamique décroit légèrement afin que l'accélération se stabilise au niveau de la valeur maximale autorisée. Autrement dit, le premier comparateur du premier limiteur a comparé la valeur du premier paramètre estimée, ici l'accélération, avec une valeur maximale prédéfinie du premier paramètre, ici 450 radian/s². Comme le résultat de la comparaison indique alors que la valeur mesurée est supérieure à la valeur maximale autorisée de 450 radian/s², le premier correcteur génère un premier courant de correction négatif. Ce premier courant de correction est additionné au courant maximal dynamique qui décroit.

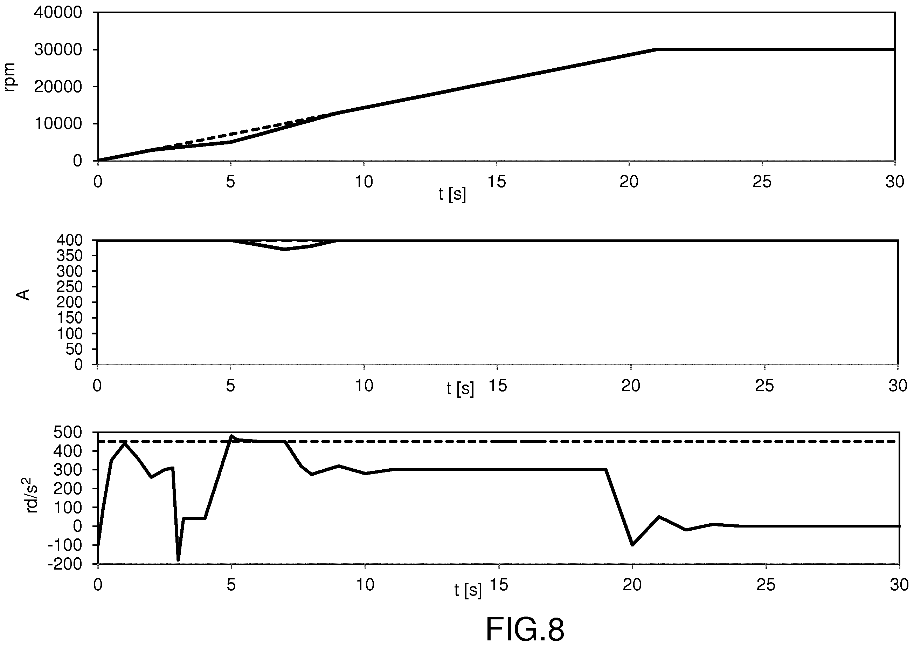

La figure 8 représente un diagramme illustrant les valeurs de vitesse, accélération et courant issues d'une simulation d'un démarrage sur une rampe de vitesse avec à-coup de couple, avec limitation dynamique en accélération selon l'invention. Le graphique en haut de la figure 8 illustre la vitesse en fonction du temps, et plus particulièrement un démarrage en rampe de vitesse puis un échelon de vitesse à 30000 rpm. La consigne en vitesse en représentée en pointillés. Entre le temps initial et jusqu'à atteindre le plateau de la consigne en vitesse, la consigne de vitesse mesurée augmente linéairement. Le graphique au milieu de la figure 8 illustre l'évolution du courant maximal dynamique en fonction du temps, avec une valeur de courant maximale fixée à 400A, en pointillés. Le graphique en bas de la figure 8 illustre l'accélération en fonction du temps, avec une valeur d'accélération maximale, tracée en pointillés, de 450 radian/s². Un échelon de couple important est appliqué sur la charge pendant 2 secondes pendant la phase de démarrage. Cet échelon de couple a l'effet d'un couple résistant et engendre un décrochage de la vitesse mesurée visible sur le graphique du haut. En effet, à ce stade du démarrage, la valeur maximale du courant est atteinte. Il n'est pas possible de générer plus de courant. Une fois l'échelon de couple passé, au-delà de t = 5 secondes, afin de rattraper la consigne de vitesse, une accélération plus importante est produite, dépassant alors la valeur maximale d'accélération autorisée, visible sur le graphique du bas à t = 5 secondes. Le procédé de limitation dynamique de l'accélération opère alors en faisant diminuer le courant maximal dynamique, visible sur le graphique du milieu à t = 5 secondes. A cet instant, comme expliqué précédemment pour le cas présenté à la figure 7, le premier comparateur du premier limiteur a comparé la valeur du premier paramètre estimée, ici l'accélération, avec une valeur maximale prédéfinie du premier paramètre, ici 450 radian/s². Comme le résultat de la comparaison indique alors que la valeur mesurée est supérieure à la valeur maximale autorisée de 450 radian/s², le premier correcteur génère un premier courant de correction négatif. Ce premier courant de correction est additionné au courant maximal dynamique qui décroit.

Par la suite, vers t = 8 secondes, le courant maximal dynamique augmente de nouveau et la vitesse mesurée coïncide avec la consigne de vitesse. L'invention permet donc à la vitesse de rejoindre la consigne en vitesse alors qu'un démarrage à accélération limitée, c'est-à-dire sans limitation dynamique, n'autoriserait pas le ralliement à la consigne de vitesse.

Ainsi, l'invention permet de ne pas dépasser une accélération donnée quelle que soit la consigne de vitesse imposée et les éventuels échelons de couple appliqués, tout en permettant un respect de la consigne de manière optimale. L'ensemble des pièces mécaniques intervenant dans la phase de démarrage sont ainsi préservées des phénomènes d'usure précoce.

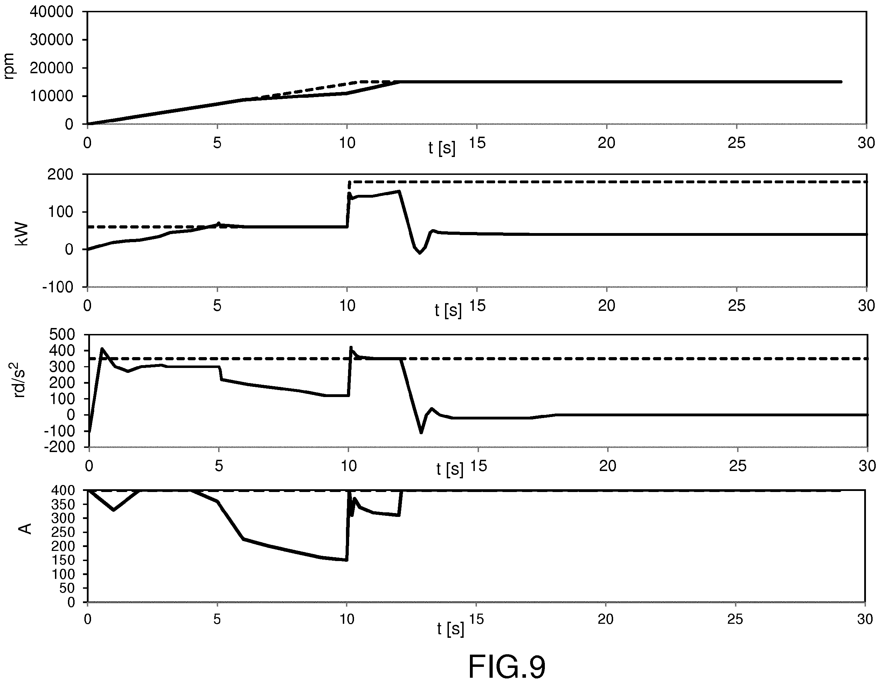

La figure 9 représente un diagramme illustrant les valeurs de vitesse, puissance, accélération et courant issues d'une simulation d'un démarrage avec limitation dynamique en accélération et en puissance selon l'invention. Le graphique en haut de la figure 9 illustre la vitesse en fonction du temps, et plus particulièrement un démarrage en rampe de vitesse puis un échelon de vitesse à 30000 rpm. La consigne en vitesse est tracée en pointillés. Entre le temps initial et jusqu'à atteindre le plateau de la consigne en vitesse, la consigne de vitesse mesurée augmente linéairement. Sous le graphique de vitesse est représenté le graphique illustrant la puissance en fonction du temps, avec une valeur maximale de puissance à 60 kW jusqu'à 10 secondes puis à 180 kW à partir de 10 secondes, tracée en pointillés. Sous le graphique de puissance est représenté le graphique illustrant l'accélération en fonction du temps, avec une valeur maximale d'accélération de 350 radian/s². Sous le graphique d'accélération est représenté le graphique illustrant le courant en fonction du temps, avec une valeur maximale de courant, c'est-à-dire un courant de saturation, à 400 A, tracée en pointillés. En début de démarrage, la puissance et l'accélération augmentent de façon à ce que la vitesse rejoigne la consigne de vitesse. Vers t = 1 seconde, l'accélération dépasse la valeur maximale, ce qui induit une diminution du courant maximal dynamique. Autrement dit, le premier comparateur du premier limiteur a comparé la valeur du premier paramètre estimée, ici l'accélération, avec une valeur maximale prédéfinie du premier paramètre, ici 350 radian/s². Comme le résultat de la comparaison indique alors que la valeur mesurée est supérieure à la valeur maximale autorisée de 350 radian/s², le premier correcteur génère un premier courant de correction négatif. Ce premier courant de correction est additionné au courant maximal dynamique qui décroit.

A t = 5 secondes, la puissance dépasse la valeur maximale de puissance de 60 kW. Une phase de limitation de puissance ralentit la vitesse. Le courant maximal dynamique est cette fois-ci diminué fortement. Autrement dit, le deuxième comparateur du deuxième limiteur a comparé la valeur du deuxième paramètre estimée, ici la puissance, avec une valeur maximale prédéfinie du premier paramètre, ici 60 kW. Comme le résultat de la comparaison indique alors que la valeur mesurée est supérieure à la valeur maximale autorisée de 60 kW, le deuxième correcteur génère un deuxième courant de correction négatif. En présence d'un premier courant de correction et d'un deuxième courant de correction, le module de choix choisit le courant parmi le premier courant de correction et le deuxième courant de correction à additionner au courant maximal dynamique pour obtenir le courant maximal dynamique qui répondra aux deux limitations de puissance et d'accélération. C'est alors le plus faible parmi les deux courants maximal dynamique qui est choisi.

A t = 10 secondes, la valeur maximale de puissance passe de 60 à 180 kW, il n'y a alors plus de limitation en puissance. Pour tenter d'obtenir une vitesse qui rejoint la consigne de vitesse, une accélération importante se produit. Cette accélération étant alors supérieure à la valeur de 350 radian/s², le procédé de limitation dynamique de l'accélération opère alors en faisant diminuer le courant maximal dynamique, visible sur les graphiques entre 10 et 12 secondes. On note aussi que l'invention permet à la vitesse d'atteindre rapidement la consigne de vitesse, tout en assurant que les valeurs maximales d'accélération et de puissance ne soient pas dépassées. Un avantage supplémentaire de l'invention réside dans le fait que la limitation de l'accélération et/ou de la puissance est dynamique. Chacun des paramètres évolue dans des gammes de valeurs autorisées et permet de rallier la consigne de fonctionnement de façon optimale, à savoir au plus vite et sans dépassement de valeurs maximales prédéfinies de certains paramètres.

## Revendications

1. Dispositif de limitation dynamique (10, 30) d'au moins un paramètre dynamique de sortie (14, 24) d'un moteur électrique (11) apte à recevoir au moins une consigne de fonctionnement, **caractérisé en ce qu'**un premier du au moins un paramètre dynamique de sortie étant l'accélération de l'arbre moteur,
**en ce qu'**il comprend :
• un générateur d'un courant maximal dynamique proportionnel à une première consigne de fonctionnement (12) du moteur (11) et destiné à alimenter le moteur (11) pour générer un couple de rotation d'un arbre du moteur électrique (11) en fonction de la première consigne (12),
• un premier estimateur (13, 23) de l'accélération (14, 24) du moteur électrique (11),
• un premier limiteur dynamique (15, 25) de l'accélération (14, 24) du moteur (11),
et **en ce que** le premier limiteur dynamique (15, 25) de l'accélération (14, 24) du moteur (11) comprend :
• un premier comparateur (16, 26) de la valeur de l'accélération estimée avec une valeur maximale prédéfinie (18) de l'accélération (14),
• un premier correcteur (19) destiné à générer un premier courant de correction (20) dont la valeur dépend du résultat de la comparaison et destiné à être additionné au courant maximal dynamique pour alimenter le moteur (11).

2. Dispositif de limitation dynamique (30) selon la revendication précédente, un deuxième du au moins un paramètre dynamique de sortie étant la puissance en sortie du moteur, **caractérisé en ce qu'**il comprend :
• un deuxième estimateur (23) de la puissance (24) en sortie du moteur électrique (11),
• un deuxième limiteur dynamique (25) de la puissance (24) en sortie du moteur (11),
et **en ce que** le deuxième limiteur dynamique (25) de la puissance (24) en sortie du moteur (11) comprend :
• un deuxième comparateur (26) de la valeur de la puissance estimée avec une valeur maximale prédéfinie de la puissance,
• un deuxième correcteur destiné à générer un deuxième courant de correction (27) dont la valeur dépend du résultat de la comparaison et destiné à être additionné au courant maximal dynamique pour alimenter le moteur (11),
• un module de choix (26) destiné à choisir le courant le plus faible parmi le premier courant de correction (20) et le deuxième courant de correction (27) à additionner au courant maximal dynamique pour alimenter le moteur (11).

3. Dispositif de limitation dynamique (30) selon l'une des revendications 1 ou 2, **caractérisé en ce que** la valeur maximale de l'accélération (14) est réglable et **en ce qu'**elle peut être supérieure à toute valeur possible de l'accélération (14).

4. Dispositif de limitation dynamique (30) selon l'une des revendications 2 ou 3, **caractérisé en ce que** la valeur maximale de la puissance (24) est réglable et **en ce qu'**elle peut être supérieure à toute valeur possible de la puissance (24).

5. Dispositif de limitation dynamique selon l'une des revendications précédentes, **caractérisé en ce qu'**il comprend en outre un dispositif de pilotage en commande vectorielle (29) du moteur électrique (11), le moteur comprenant :
• un stator comprenant des enroulements, apte à recevoir un courant de pilotage (i1, i2, i3) et produire un champ magnétique tournant, les enroulements du stator générant une tension (fcem) aux bornes du moteur (11)
• un rotor produisant un champ magnétique destiné à suivre le champ magnétique tournant
et **en ce que** le dispositif de pilotage (29) comprend :
• un générateur (33) d'un courant (Idref, Iqref) dans un domaine vectoriel,
• un calculateur (34) configuré pour faire une transformée du courant (Idref) du domaine vectoriel vers un domaine réel permettant la génération du courant de pilotage (i1, i2, i3),
• un calculateur inverse (35) configuré pour faire une transformée inverse d'un paramètre mesuré dans le domaine réel sur les enroulements statoriques en une transformée inverse du paramètre dans le domaine vectoriel,
• un comparateur (36) de la valeur de la transformée inverse du paramètre avec une valeur maximale prédéfinie du paramètre (Dmax), dont le résultat permet de piloter le générateur (33) du courant dans le domaine vectoriel.

6. Dispositif de limitation dynamique selon la revendication précédente, **caractérisé en ce que** le courant généré par le générateur (33) du courant (Idref) dans le domaine vectoriel est un courant de consigne direct établi en coordonnées de Park et **en ce que** le calculateur (34) est configuré pour recevoir un courant de consigne en quadrature (Iqref) établi en coordonnées de Park et proportionnel à la consigne de fonctionnement.

7. Dispositif de limitation dynamique selon l'une quelconque des revendications 5 ou 6, **caractérisé en ce que** le paramètre mesuré dans le domaine réel est la tension (fcem) aux bornes du moteur (11).

8. Dispositif de limitation dynamique selon l'une quelconque des revendications 5 à 7, **caractérisé en ce que** le générateur (33) du courant (Idref) est un correcteur de défluxage délivrant le courant (Idref) :
• nul si la valeur de la transformée inverse du paramètre est inférieure à la valeur maximale prédéfinie de paramètre (Dmax) ou
• non nul si la valeur de la transformée inverse du paramètre est supérieure ou égale à la valeur maximale prédéfinie de paramètre (Dmax).

9. Procédé de limitation dynamique mettant en oeuvre un dispositif de limitation dynamique (10, 30) d'au moins un paramètre dynamique de sortie (14, 24) d'un moteur électrique (11) apte à recevoir au moins une consigne de fonctionnement, **caractérisé en ce qu'**un premier du au moins un paramètre dynamique de sortie étant l'accélération de l'arbre moteur, comprenant :
• un générateur d'un courant maximal dynamique proportionnel à une première consigne de fonctionnement (12) du moteur (11) et destiné à alimenter le moteur (11) pour générer un couple de rotation d'un arbre du moteur électrique (11) en fonction de la première consigne (12),
• un premier estimateur (13, 23) de l'accélération (14, 24) de l'arbre moteur (11),
• un premier limiteur dynamique (15, 25) de l'accélération (14, 24) de l'arbre moteur (11),
le premier limiteur dynamique (15, 25) de l'accélération (14, 24) de l'arbre moteur (11) comprenant :
• un premier comparateur (16, 26) de la valeur de l'accélération estimée avec une valeur maximale prédéfinie (18) de l'accélération (14),
• un premier correcteur (19) destiné à générer un premier courant de correction (20) dont la valeur dépend du résultat de la comparaison et destiné à être additionné au courant maximal dynamique pour alimenter le moteur (11),
et **en ce que** le procédé comporte les étapes suivantes :
• comparaison de la valeur de l'accélération estimée avec une valeur maximale de l'accélération prédéfinie,
• génération d'un premier courant de correction (20) dont la valeur dépend du résultat de la comparaison et destiné à être additionné au courant maximal dynamique pour alimenter le moteur (11), de manière à ce que l'accélération de l'arbre moteur (14) ne dépasse pas la valeur maximale de l'accélération et l'accélération corresponde à la consigne de fonctionnement (12).

10. Procédé de limitation dynamique selon la revendication précédente, un deuxième du au moins un paramètre dynamique de sortie étant la puissance en sortie du moteur, le dispositif de limitation dynamique (30) comprenant :
• un deuxième estimateur (23) de la puissance (24) en sortie du moteur électrique (11),
• un deuxième limiteur dynamique (25) de la puissance (24) en sortie du moteur (11),
le deuxième limiteur dynamique (25) de la puissance (24) en sortie du moteur (11) comprenant :
• un deuxième comparateur (26) de la valeur de la puissance estimée avec une valeur maximale prédéfinie de la puissance ,
• un deuxième correcteur destiné à générer un deuxième courant de correction (27) dont la valeur dépend du résultat de la comparaison et destiné à être additionné au courant maximal dynamique pour alimenter le moteur (11),
**caractérisé en ce qu'**il comporte les étapes suivantes :
• comparaison de la valeur de la puissance estimée avec une valeur maximale de la puissance prédéfinie,
• génération d'un deuxième courant de correction (27) dont la valeur dépend du résultat de la comparaison et destiné à être additionné au courant maximal dynamique pour alimenter le moteur (11), de manière à ce que la puissance (24) ne dépasse pas la valeur maximale de la puissance et la puissance corresponde à la consigne de fonctionnement (12).

11. Procédé de limitation dynamique selon la revendication précédente, le dispositif de limitation dynamique (30) comprenant un module de choix (26) destiné à choisir le courant le plus faible parmi le premier courant de correction (20) et le deuxième courant de correction (27) à additionner au courant maximal dynamique pour alimenter le moteur (11). **caractérisé en ce qu'**il comporte en outre une étape de choix du courant le plus faible parmi le premier courant de correction (20) et le deuxième courant de correction (27) à additionner au courant maximal dynamique pour alimenter le moteur.

## Patentansprüche

1. Vorrichtung zur dynamischen Begrenzung (10, 30) von wenigstens einem dynamischen Ausgangsparameter (14, 24) eines Elektromotors (11), der wenigstens einen Betriebssollwert empfangen kann, **dadurch gekennzeichnet, dass** ein erster aus dem wenigstens einen dynamischen Ausgangsparameter die Beschleunigung der Motorwelle ist,
dadurch, dass sie Folgendes umfasst:
• einen Generator eines maximalen dynamischen Stroms proportional zu einem ersten Betriebssollwert (12) des Motors (11) und bestimmt zum Versorgen des Motors (11) zum Erzeugen eines Drehmoments einer Welle des Elektromotors (11) in Abhängigkeit von dem ersten Sollwert (12),
• einen ersten Schätzer (13, 23) der Beschleunigung (14, 24) des Elektromotors (11),
• einen ersten dynamischen Begrenzer (15, 25) der Beschleunigung (14, 24) des Motors (11),
und dadurch, dass der erste dynamische Begrenzer (15, 25) der Beschleunigung (14, 24) des Motors (11) Folgendes umfasst:
• einen ersten Komparator (16, 26) des geschätzten Beschleunigungswertes mit einem vordefinierten Höchstwert (18) der Beschleunigung (14),
• einen ersten Korrektor (19), bestimmt zum Erzeugen eines ersten Korrekturstroms (20), dessen Wert vom Ergebnis des Vergleichs abhängig ist und der zum Hinzufügen zum maximalen dynamischen Strom zum Versorgen des Motors (11) bestimmt ist.

2. Vorrichtung zur dynamischen Begrenzung (30) nach dem vorherigen Anspruch, wobei ein zweiter aus dem wenigstens einen dynamischen Ausgangsparameter die Leistung am Ausgang des Motors ist, **dadurch gekennzeichnet, dass** sie Folgendes umfasst:
• einen zweiten Schätzer (23) der Leistung (24) am Ausgang des Elektromotors (11),
• einen zweiten dynamischen Begrenzer (25) der Leistung (24) am Ausgang des Motors (11),
und dadurch, dass der zweite dynamische Begrenzer (25) der Leistung (24) am Ausgang des Motors (11) Folgendes umfasst:
• einen zweiten Komparator (26) des geschätzten Leistungswertes mit einem vordefinierten Höchstwert der Leistung,
• einen zweiten Korrektor, bestimmt zum Erzeugen eines zweiten Korrekturstroms (27), dessen Wert vom Ergebnis des Vergleichs abhängig ist und der zum Hinzufügen zum maximalen dynamischen Strom zum Versorgen des Motors (11) bestimmt ist,
• ein Auswahlmodul (26), bestimmt zum Auswählen des schwächsten Stroms unter dem ersten Korrekturstrom (20) und dem zweiten Korrekturstrom (27) zum Hinzufügen zum maximalen dynamischen Strom zum Versorgen des Motors (11).

3. Vorrichtung zur dynamischen Begrenzung (30) nach Anspruch 1 oder 2, **dadurch gekennzeichnet, dass** der Höchstwert der Beschleunigung (14) regelbar ist, und dadurch, dass er größer sein kann als jeder mögliche Wert der Beschleunigung (14).

4. Vorrichtung zur dynamischen Begrenzung (30) nach Anspruch 2 oder 3, **dadurch gekennzeichnet, dass** der Höchstwert der Leistung (24) regelbar ist, und dadurch, dass er größer sein kann als jeder mögliche Wert der Leistung (24).

5. Vorrichtung zur dynamischen Begrenzung nach einem der vorherigen Ansprüche, **dadurch gekennzeichnet, dass** er ferner eine Steuervorrichtung zur Vektorsteuerung (29) des Elektromotors (11) umfasst, wobei der Motor Folgendes umfasst:
• einen Stator mit Wicklungen, die einen Ansteuerstrom (i1, i2, i3) empfangen und ein drehendes Magnetfeld produzieren können, wobei die Wicklungen des Stators eine Spannung (fcem) an den Anschlüssen des Motors (11) erzeugen,
• einen Rotor, der ein Magnetfeld produziert, bestimmt zum Verfolgen des drehenden Magnetfelds,
und dadurch, dass die Steuervorrichtung (29) Folgendes umfasst:
• einen Generator (33) eines Strom (Idref, Iqref) in einer Vektordomäne,
• einen Kalkulator (34), konfiguriert zum Durchführen einer Transformation des Stroms (Idref) der Vektordomäne in eine reale Domäne, so dass der Ansteuerstrom (i1, i2, i3) erzeugt werden kann,
• einen Umkehrkalkulator (35), konfiguriert zum Durchführen einer Umkehrtransformation eines in der realen Domäne gemessenen Parameters an den Statorwicklungen in eine Umkehrtransformation des Parameters in der Vektordomäne,
• einen Komparator (36) des Wertes der Umkehrtransformation des Parameters mit einem vordefinierten Höchstwert des Parameters (Dmax), dessen Resultat das Ansteuern des Generators (33) für den Strom in der Vektordomäne zulässt.

6. Vorrichtung zur dynamischen Begrenzung nach dem vorherigen Anspruch, **dadurch gekennzeichnet, dass** der vom Generator (33) des Stroms (Idref) erzeugte Strom in der Vektordomäne ein in Park-Koordinaten festgelegter Direkt-Sollwertstrom ist, und dadurch, dass der Kalkulator (34) zum Empfangen eines Quadratur-Sollwertstroms (Iqref) konfiguriert ist, festgelegt in Park-Koordinaten und proportional zum Betriebssollwert.

7. Vorrichtung zur dynamischen Begrenzung nach Anspruch 5 oder 6, **dadurch gekennzeichnet, dass** der in der realen Domäne gemessene Parameter die Spannung (fcem) an den Anschlüssen des Motors (11) ist.

8. Vorrichtung zur dynamischen Begrenzung nach einem der Ansprüche 5 bis 7, **dadurch gekennzeichnet, dass** der Generator (33) des Stroms (Idref) ein Feldschwächungskorrektor ist, der den Strom (Idref) liefert:
• null, wenn der Wert der Umkehrtransformation des Parameters kleiner ist als der vordefinierte Höchstwert des Parameters (Dmax), oder
• ungleich null, wenn der Wert der Umkehrtransformation des Parameters gleich oder größer ist als der vordefinierte Höchstwert des Parameters (Dmax).

9. Verfahren zur dynamischen Begrenzung, das eine Vorrichtung zur dynamischen Begrenzung (10, 30) von wenigstens einem dynamischen Ausgangsparameter (14, 24) eines Elektromotors (11) ausführt, das wenigstens einen Betriebssollwert empfangen kann, **dadurch gekennzeichnet, dass** ein erster aus dem wenigstens einen dynamischen Ausgangsparameter die Beschleunigung der Motorwelle ist, das Folgendes beinhaltet:
• einen Generator eines dynamischen maximalen Stroms proportional zu einem ersten Betriebssollwert (12) des Motors (11) und bestimmt zum Versorgen des Motors (11) zum Erzeugen eines Drehmoments einer Welle des Elektromotors (11) in Abhängigkeit von dem ersten Sollwert (12),
• einen ersten Schätzer (13, 23) der Beschleunigung (14, 24) der Motorwelle (11),
• einen ersten dynamischen Begrenzer (15, 25) der Beschleunigung (14, 24) der Motorwelle (11),
wobei der erste dynamische Begrenzer (15, 25) der Beschleunigung (14, 24) der Motorwelle (11) Folgendes umfasst:
• einen ersten Komparator (16, 26) des Wertes der geschätzten Beschleunigung mit einem vordefinierten Höchstwert (18) der Beschleunigung (14),
• einen ersten Korrektor (19), bestimmt zum Erzeugen eines ersten Korrekturstroms (20), dessen Wert vom Ergebnis des Vergleichs abhängig ist, und bestimmt zum Hinzufügen zum dynamischen maximalen Strom zum Versorgen des Motors (11),
und dadurch, dass das Verfahren die folgenden Schritte beinhaltet:
• Vergleichen des Wertes der geschätzten Beschleunigung mit einem vordefinierten Höchstwert der Beschleunigung,
• Erzeugen eines ersten Korrekturstroms (20), dessen Wert vom Ergebnis des Vergleichs abhängig ist, und bestimmt zum Hinzufügen zum dynamischen maximalen Strom zum Versorgen des Motors (11) auf eine solche Weise, dass die Beschleunigung der Motorwelle (14) den Höchstwert der Beschleunigung nicht übersteigt und die Beschleunigung dem Betriebssollwert (12) entspricht.

10. Verfahren zur dynamischen Begrenzung nach dem vorherigen Anspruch, wobei ein zweiter aus dem wenigstens einen dynamischen Ausgangsparameter die Leistung am Ausgang des Motors ist, wobei die Vorrichtung zur dynamischen Begrenzung (30) Folgendes umfasst:
• einen zweiten Schätzer (23) der Leistung (24) am Ausgang des Elektromotors (11),
• einen zweiten dynamischen Begrenzer (25) der Leistung (24) am Ausgang des Motors (11),
wobei der zweite dynamische Begrenzer (25) der Leistung (24) am Ausgang des Motors (11) Folgendes umfasst:
• einen zweiten Komparator (26) des geschätzten Wertes der Leistung mit einem vordefinierten Höchstwert der Leistung,
• einen zweiten Korrektor, bestimmt zum Erzeugen eines zweiten Korrekturstroms (27), dessen Wert vom Ergebnis des Vergleichs abhängig ist, und bestimmt zum Hinzufügen zu dem maximalen dynamischen Strom zum Versorgen des Motors (11),
**dadurch gekennzeichnet, dass** es die folgenden Schritte beinhaltet:
• Vergleichen des geschätzten Leistungswertes mit einem vordefinierten Leistungshöchstwert,
• Erzeugen eines zweiten Korrekturstroms (27), dessen Wert vom Ergebnis des Vergleichs abhängig ist, und bestimmt zum Hinzufügen zu dem maximalen dynamischen Strom zum Versorgen des Motors (11) auf eine solche Weise, dass die Leistung (24) den Höchstwert der Leistung nicht übersteigt und die Leistung dem Betriebssollwert (12) entspricht.

11. Verfahren zur dynamischen Begrenzung nach dem vorherigen Anspruch, wobei die Vorrichtung zur dynamischen Begrenzung (30) ein Auswahlmodul (26) umfasst, bestimmt zum Auswählen des schwächsten Stroms unter dem ersten Korrekturstrom (20) und dem zweiten Korrekturstrom (27) zum Hinzufügen zum maximalen dynamischen Strom zum Versorgen des Motors (11), **dadurch gekennzeichnet, dass** es ferner einen Schritt des Auswählens des schwächsten Stroms unter dem ersten Korrekturstrom (20) und dem zweiten Korrekturstrom (27) zum Hinzufügen zu dem maximalen dynamischen Strom zum Versorgen des Motors beinhaltet.

## Claims

1. Dynamic limitation device (10, 30) of at least one dynamic output parameter (14, 24) of an electric motor (11) capable of receiving at least one working setpoint, **characterized in that** a first of the at least one dynamic output parameter being the drive shaft acceleration,
**in that** it comprises:
• a generator of a dynamic maximum current proportional to a first working setpoint (12) of the motor (11) and intended to supply the motor (11) in order to generate a rotating torque of a shaft of the electric motor (11) as a function of the first setpoint (12),
• a first estimator (13, 23) of the acceleration (14, 24) of the electric motor (11),
• a first dynamic limiter (15, 25) of the acceleration (14, 24) of the motor (11),
and **in that** the first dynamic limiter (15, 25) of the acceleration (14, 24) of the motor (11) comprises:
• a first comparator (16, 26) of the value of the estimated acceleration with a predefined maximum value (18) of the acceleration (14),
• a first corrector (19) intended to generate a first correction current (20), the value of which depends on the result of the comparison and is intended to be added to the dynamic maximum current to supply the motor (11).

2. Dynamic limitation device (30) according to the preceding claim, a second of the at least one dynamic output parameter being the output power of the motor, **characterised in that** it comprises:
• a second estimator (23) of the output power (24) of the electric motor (11),
• a second dynamic limiter (25) of the output power (24) of the motor (11), and **in that** the second dynamic limiter (25) of the output power (24) of the motor (11) comprises:
• a second comparator (26) of the value of the estimated power with a predefined maximum value of the power,
• a second corrector intended to generate a second correction current (27), the value whereof depends on the result of the comparison and is intended to be added to the dynamic maximum current to supply the motor (11),
• a selection module (26) intended to select the weaker current from between the first correction current (20) and the second correction current (27) to be added to the dynamic maximum current to supply the motor (11).

3. Dynamic limitation device (30) according to one of Claims 1 or 2, **characterised in that** the maximum value of the acceleration (14) is adjustable and **in that** it may be greater than any possible value of the acceleration (14).

4. Dynamic limitation device (30) according to one of Claims 2 or 3, **characterised in that** the maximum value of the power (24) is adjustable and **in that** it may be greater than any possible value of the power (24).

5. Dynamic limitation device according to one of the preceding claims, **characterised in that** it further comprises a vector control driving device (29) of the electric motor (11), the motor comprising:
• a stator comprising windings, capable of receiving a driving current (i1, i2, i3) and producing a rotating magnetic field, the stator windings generating a voltage (fcem) at the motor terminals (11),
• a rotor producing a magnetic field intended to follow the rotating magnetic field,
and **in that** the driving device (29) comprises:
• a generator (33) of a current (Idref, Iqref) in a vector domain,
• a calculator (34) configured to carry out a transform of the current (Idref) of the vector domain to a real domain allowing for generation of the driving current (i1, i2, i3),
• an inverse calculator (35) configured to carry out an inverse transform of a measured parameter in the real domain on the stator windings into an inverse transform of the parameter in the vector domain,
• a comparator (36) of the value of the inverse transform of the parameter with a predefined maximum value of the parameter (Dmax), the result whereof allows the generator (33) of the current in the vector domain to be driven.

6. Dynamic limitation device according to the preceding claim, **characterised in that** the current generated by the generator (33) of the current (Idref) in the vector domain is a direct setpoint current established in Park coordinates and **in that** the calculator (34) is configured to receive a quadrature setpoint current (Iqref) established in Park coordinates and proportional to the working setpoint.

7. Dynamic limitation device according to any one of Claims 5 or 6, **characterised in that** the measured parameter in the real domain is the voltage (fcem) at the terminals of the motor (11).

8. Dynamic limitation device according to any one of Claims 5 to 7, **characterised in that** the generator (33) of the current (Idref) is a defluxing corrector delivering the current (Idref) :
• zero if the value of the inverse transform of the parameter is less than the predefined maximum parameter value (Dmax) or
• non-zero if the value of the inverse transform of the parameter is greater than or equal to the predefined maximum parameter value (Dmax).

9. Dynamic limitation method implementing a dynamic limitation device (10, 30) of at least one dynamic output parameter (14, 24) of an electric motor (11) capable of receiving at least one working setpoint, **characterized in that** a first of the at least one dynamic output parameter being the acceleration of the drive shaft, comprising:
• a generator of a dynamic maximum current proportional to a first working setpoint (12) of the motor (11) and intended to supply the motor (11) in order to generate a rotating torque of a shaft of the electric motor (11) as a function of the first setpoint (12),
• a first estimator (13, 23) of the acceleration (14, 24) of the drive shaft (11),
• a first dynamic limiter (15, 25) of the acceleration (14, 24) of the drive shaft (11),
the first dynamic limiter (15, 25) of the acceleration (14, 24) of the drive shaft (11) comprising:
• a first comparator (16, 26) of the value of the estimated acceleration with a predefined maximum value (18) of the acceleration (14),
• a first corrector (19) intended to generate a first correction current (20), the value of which depends on the result of the comparison and is intended to be added to the dynamic maximum current to supply the motor (11),
and **in that** it comprises the following steps:
• comparison of the value of the estimated acceleration with a maximum value of the predefined acceleration,
• generation of a first correction current (20), the value of which depends on the result of the comparison, and which is intended to be added to the dynamic maximum current to supply the motor (11), in such a manner that the acceleration of the drive shaft (14) does not exceed the maximum value of the acceleration and the acceleration corresponds to the working setpoint (12).

10. Dynamic limitation method according to the preceding claim, a second of the at least one dynamic output parameter being the output power of the motor, the dynamic limitation device (30) comprising:
• a second estimator (23) of the output power (24) of the electric motor (11),
• a second dynamic limiter (25) of the output power (24) of the motor (11), the second dynamic limiter (25) of the output power (24) of the motor (11) comprising:
• a second comparator (26) of the value of the estimated power with a predefined maximum value of the power,
• a second corrector intended to generate a second correction current (27), the value whereof depending on the result of the comparison and is intended to be added to the dynamic maximum current to supply the motor (11),
**characterised in that** it comprises the following steps:
• comparison of the value of the estimated power with a maximum value of the predefined power,
• generation of a second correction current (27), the value of which depends on the result of the comparison, and which is intended to be added to the dynamic maximum current to supply the motor (11), in such a manner that the power (24) does not exceed the maximum value of the power and the power corresponds to the working setpoint (12).

11. Dynamic limitation method according to the preceding claim, the dynamic limitation device (30) comprising a selection module (26) intended to select the weaker current from between the first correction current (20) and the second correction current (27) to be added to the dynamic maximum current to supply the motor (11), **characterised in that** it further comprises a selection step of the weaker current from between the first correction current (20) and the second correction current (27) to be added to the dynamic maximum current to supply the motor.
